# EUROPEAN PATENT SPECIFICATION

(11) **EP 3 862 202 B1**
(45) Date of publication and mention of the grant of the patent: **10.04.2024**
(21) Application number: 20155595.0
(22) Date of filing: 05.02.2020
(51) Int. Cl.: B60J 3/04

(54) **ACTIVE OPACITY CONTROLLABLE THIN FILMS FOR WINDSHIELDS**
DÜNNSCHICHTEN MIT AKTIV STEUERBARER OPAZITÄT FÜR WINDSCHUTZSCHEIBEN
FILMS MINCES À OPACITÉ CONTRÔLABLE ACTIVE POUR PARE-BRISE

(43) Date of publication of application: 11.08.2021
(73) Proprietor: Benecke-Kaliko AG, 30419 Hannover (DE)
(72) Inventor: George, Jofin, 30419 Hannover (DE); Rugmini Narasimhan, Sreelakshmi, 30419 Hannover (DE)
(74) Representative: Continental Corporation

(56) References cited:
- EP-A2- 2 003 005
- WO-A1-2012/079159
- WO-A1-2014/124592
- WO-A1-2016/207690
- JP-A- S59 167 323

## Description

The invention concerns sun glare protection devices, which are installable on the windscreen of vehicles and which comprise an electrically activatable thin film capable of changing its opacity or translucency and a light sensor attached to the electrically activatable thin film. The invention further concerns methods for the production of and vehicles equipped with such devices, using a light sensor to detect the intensity of light in the direction of the driver's eyes in a vehicle and to correspondingly adjust the translucency and/or opacity of an electrically activatable thin glass film.

### State of the Art

A serious problem, when driving a vehicle at times close to sunrise or sunset, is glaring on the windshield, which may impair the driver's vision and thus is not only frustrating and annoying but may also lead to dangerous situations in traffic. While the most abundant means to alleviate this problem is sunglasses, the problem with this solution is that many drivers will not have their sunglasses on them when they are needed and in addition, it is necessary that the driver put them on at the right time which may distract the driver's attention.

The currently most abundant other solution to this problem are sun-visors, which can be folded down. However, like the sunglasses, the driver has to actively fold down the visor, which may distract his attention and often, the glaring is only realized by the driver at a point in time where he already is driving against the sun, so that sun-visor are no fully satisfying solution.

A further option to avoid the glaring are permanently installed sun-bands, which however have the disadvantage that the bands in times where they are not needed, may impair the vision of the driver.

An option to avoid or at least reduce the glaring problem is to wear glasses with leases, which have a variable coefficient of transmission and which can change their opacity/translucency depending on the amount of light, which passes the glasses (also known as photochromic glasses). Such glasses may also have a sensor for detecting the brightness of the light attached thereto, such as in the Crtl^{®} One glasses available form e-Tint.

An advancement of such glasses, wherein the photochromic effect is controlled via a wireless system taking account the light intensity measured by a photosensitive sensor, which is installed on the vehicle is described in US 2015/062469 A1.

While this solution allows a dynamic adjustment of the amount of light, which falls into the eyes of the driver, it has the disadvantage that the driver has to wear glasses and that he may not always have the glasses with him, when getting into the car. To avoid this "error-prone"-human factor, a solution to the glare problem, wherein all means to dynamically adjust the translucency/opacity of the windscreen or at least the relevant upper part thereof, are installed in the vehicle, would be desirable.

US 2010/0094501 A1 describes a system and methods for an accurate calculation of the precise position and the display of a sun glare block area on a windshield of a vehicle, wherein the calculation is based on the input of information from various sensors and units such as GPS, digital clocks, digital compasses and various others. By means of these sensors, the system is capable to calculate the position of the sun and the direction of the vehicle thereto and thus the area of the windscreen, which has to be blocked or "tinted" to reduce the glare. This system, has the disadvantage, that it is relatively complex and requires a significant number of sensors, which have to be installed in the vehicle. Thus, retrofitting a vehicle with such a system, is not easily possible.

US 2010/065721 A1 describes a system, wherein the windshield is divided into individual pixels the transparency/opacity of which can be individually adjusted in response to the light intensity detected by a sensor. In US 2010/065721 A1 this sensor is likewise divided into parts for each pixel of the windscreen, and each sensor part individually controls the transparency/opacity of a respective pixel on the windscreen dependent on the amount of light detected. While this solution allows to control the transparence of the windscreen with high precision, it uses an external sensor array plate which is mapped with a plurality of pixels and is hence associated with increased complexity and cost.

US 6,568,738 B1 describes an optical glare limiter which is used together with a reflecting surface to mitigate blinding glare caused by sunlight falling on the windscreen, wherein the optical glare limiter comprises a light source emitting light on a reflective surface in the windscreen depending on the intensity of external light falling on the sensor. In this manner, the light in the driver's field of vision has a contrast which is homogeneous and widespread and which thus has a reduced blinding effect.

EP 2 003 005 A2 describes a motor vehicle 1 that has a partial or segmental darkened windshield 2 or side window. The motor vehicle has a controller for automatic selection of the position of a partial or segmental darkened windshield or side window in dependence of a value for the condition of sun and a value for the eye position of the passengers of the motor vehicle. The motor vehicle has a control element for manual correction of the position of partial or segmental darkening of the windshield or side window.

Finally, JPS59-167323 discloses a sunglare protection device which is adapted to be installable from the inside, comprising an electrically activatable film and a light sensor.

The above described dynamic means to adjust transparency/opacity of a windscreen all have the disadvantage that they are relatively complex and that they cannot easily be retrofitted into a vehicle.

Hence there is a need for a dynamic sun glare protection device, which can be easily fitted into a vehicle and wherein the amount of sensors is reduced as much as possible. Preferably, it should be possible to install the device on the inner side of a windscreen and all parts thereof should be associated with one another to avoid having to install multiple parts of the device, thus reducing the risk of defective installation.

The present application addresses these needs.

### Description of the invention

In a first aspect, the application concerns a sun glare protection device (2), which is adapted to be installable on the windscreen of a vehicle (1) from the inside, wherein the device (2) comprises an electrically activatable thin film (3), which covers at least the 80% of the surface of the device (2) and which on electrical activation changes its opacity or translucency, and comprising a light sensor, characterized in that the light sensor is attached to the electrically activatable thin film (3) and capable to detect the intensity of light in an estimated position of the driver's eyes in that the sensor (4) is configured to detect the position of the sun relative to the orientation of a windscreen.

The opacity and translucency in the above is meant to encompass embodiments, wherein the electrically activatable thin film becomes more or less tinted depending on the electrical input signal. The feature of the light sensor "being attached to the device such that the sensor is capable to detect the intensity of light in an estimated position of the driver's eyes means that the sensor is configured to or can detect the position of the sun relative to the orientation of a windscreen.

In the device, the light sensor is installed such that it can detect the intensity of light in an estimated position of the driver's eyes, which is preadjusted in the device and is estimated taking into account a reasonable variability of the dimensions of the space, where the eyes of the driver will be most probably during driving, as well as differences in the height and physique/type of the driver. Depending on the intensity of light, which falls on the sensor, the intensity of light falling into the driver's eyes can be estimated and the opacity or translucency of the electrically activatable thin film can be adjusted to reduce this amount. The opacity/translucency is regularly maintained at a level, where a sufficient vision of the environment in front of the windscreen is still ensured.

Preferably, the light sensor is pre-assembled on the sun glare protection device.

The material, on which the electrically activatable thin film is based, is not subject to any relevant restrictions, provided that it is possible to adjust/control the opacity/translucency based on an electrical input signal. Particularly useful electrically activatable thin film for the purposes of this invention are based on an electrochromic material, a suspended-particle material or a polymer-dispersed liquid-crystal material. From among these, a polymer-dispersed liquid-crystal material is most highly preferred. In such a device, the polymer-dispersed liquid-crystal material is regularly placed between two layers of glass or plastic. Suitable materials and glasses, which use electrochromic materials, have previously been described e.g. in US 5,114,218 A, or US 2009/027759 A1. US 7,874,666 B1 describes appropriate electrochromic polymer, which can provide a distinct color such as blue/clear (Poly[3-methyl-3'-propyl-3,4-dihydro-2H-thieno(3,4-b)(1,4)dioxepine]; PPropOT-MePro), red/clear Poly[3,3-diethyl-3,4-dihydro-2H,7H-(1,4)dioxepino(2,3-c)pyrrole] (PPropOP-Et₂) or green/clear such as polymers based on 2,3-dibenzyl-5,7-di(thien-2-yl)-thieno-[3,4]-pyrazine could also be used, if desired.

The inventive device can comprise an electrically activatable thin film, which can only be triggered to become more or less translucent/opaque in its entirety (as the most simple embodiment thereof), but is it also possible that parts or sections of the electrically activatable thin film can be triggered individually to become more or less translucent/opaque. For example, it is possible that the electrically activatable thin film has band or individual pixels, which can be triggered individually, and that the bands or pixels are triggered to become more or less translucent/opaque based on the estimated height of the sun. In this manner, it is e.g. possible to only darken the part of the windscreen in a specific area of interest, where the driver would almost directly look into the sun.

The sensor in the inventive device is preferably a sensor based on the principles of a pyrheliometer. In one preferred aspect, the sensor is adhered or otherwise fastened to the electrically activatable thin film to provide the sun glare protection device.

In a further preferred aspect, the inventive device further comprises a sensor, which detects the intensity of light irrespective of its direction of emission.

It is further envisioned, that the sensor and/or the sensor, which detects the intensity of light irrespective of its direction of emission, is printed on the electrically activatable thin film. Preferably, at least the sensor, which is capable to detect the intensity of light in an estimated position of the driver's eyes, is printed onto the electrically activatable thin film.

In a particularly preferred aspect, the light sensor and/or the further light sensor, which detects the intensity of light irrespective of its direction of emission is fabricated with a transparent electro conductive material. The term "fabricated with" here indicates that the transparent electro conductive material is used to prepare the sensor, but is not necessarily the only material used to prepare the sensor. Suitable transparent electro conductive materials are for example silver nanowires or nets of silver nanowires and tin oxide, as well as zinc oxide based materials, such as in particular indium or hafnium doped tin oxide or zinc oxide. These and further suitable materials and the preparation of printed circuits therefrom are described e.g. in JP 4998919 B2 or WO 1994/013851 A1. Such materials are capable of conducting electrons, while being sufficiently transparent to be barely noticeable on the surface on which they have been applied.

In a preferred embodiment of the invention, the light sensor in the inventive device is connected to a control device (5), which controls the translucency/opacity of the electrically activatable thin film depending on an input of the sensor. For Example, if a high light intensity is detected by the sensor, the control device adjusts a current signal, which is transmitted to the electrically activatable thin film such that the translucency/opacity thereof is increased. If on the other hand, the sensor only detects a low light intensity, the control device adjusts a current signal, which is transmitted to the electrically activatable thin film, such that the translucency/opacity thereof is reduced.

The control device is preferably in addition fitted with a manual adjusting means, by which the translucency/opacity can be adjusted to the minimum and or maximum. E.g., it is possible that the inventive device is set to maximum translucency/opacity when the car is parked, to thus avoid excessive heating of the inside of the vehicle, or block the view into the car.

If the device of the invention also has a light sensor, which detects the intensity of light irrespective of its direction of emission, the control device may also detect a difference between the amount of light detected by this sensor and the sensor, which detects the intensity of light in the estimated position of the driver's eyes, and thus adjust the electrical signals to trigger an increase or decrease of the translucency/opacity of the electrically activatable thin film.

The control device will regularly be electrically connected to the electrically activatable thin film via appropriate wiring or circuitry. This wiring/circuitry may in a preferred embodiment be fabricated from a transparent electro conductive material such as those mentioned above in connection with the sensors. In addition, the control device will preferably be positioned on the periphery of the electrically activated thin film, such that it is out of the ways of the driver vision path.

In a further aspect, the invention concerns a method for the production of a sun glare protection device as described above, wherein a substrate comprising an electrically activatable thin film is provided and a light sensor is attached thereto. In a preferred embodiment of this method, the light sensor is fabricated with or from a transparent electro conductive material.

In a yet further aspect, the invention concerns a vehicle comprising a sun glare protection device as described hereinbefore. In a preferred embodiment of this aspect, the sun glare protection device is removably attached to the windscreen of the vehicle. Possible means to removably attach the sun glare protection device include e.g. attachment with an adhesive, by adhesive strips or suction cups which can be stuck on the windscreen from the inside or which have been preinstalled on the sun glare protection device. The term "removably" encompasses embodiments, where the device can only be removed with destruction of the device (such as when the device continuously adhered to the windscreen), and embodiments, where the device can be removed without destruction thereof (such as when attached by means of suction cups).

In the vehicle, the shape of the device can be such, that it covers the major part of the windscreen (i.e. more than 50% of the area thereof) and preferably the upper part of the windscreen, where sun glare is most frequently a problem. Preferably, the device is installed such, that at least 10% of the height of the windscreen from the top thereof are covered, more preferably at least 15% and even more preferably a least 20%. It is possible that in total about 30% or about 50% of the height of the windscreen from the top thereof are covered or that even 100% of the height of the windscreen are covered. Also, it is possible that substantially the whole area of the windscreen is covered, in as much as this is technically possible.

In a yet further aspect, the invention concerns the use of a sun glare protection device (2) as described above, wherein the light sensor is installed between the vehicles windscreen and the position of the drives eyes in a vehicle and is electrically coupled to the electrically activatable thin film and wherein means are provided to adjust the translucency and/or opacity of the electrically activatable thin film based on the intensity of light measured by the light sensor. In a preferred embodiment of this use, the light sensor is fabricated with or from a transparent electro conductive material and is installed between the vehicles windscreen and the position of the driver's eyes in a vehicle.

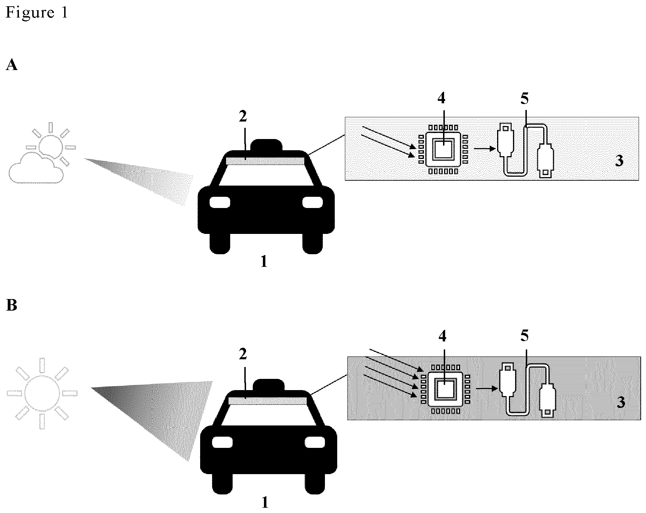

In the following, an embodiment of the inventive device as well as its installment on the windscreen of a vehicle will be described with reference to Figure 1.

Figure 1 depicts a vehicle 1 having an inventive sun glare protection device (2) installed on the windscreen thereof. The device (2) has an active opacity controllable thin film (3), a sensor (4), which is positioned on the thin film (3), which measures the incident rays of sun in line with the driver's vision and a printed circuitry and control device (5), which electrically connects the sensor with the thin film and adjusts the opacity of the thin film depending on the intensity of incident rays of sun detected by the sensor. If the signal detected by the sensor exceeds a predetermined threshold, the control device (5) provides a signal to the thin firm to change its opacity form a lower level (Fig. 1 A) to a higher level (Fig. 1 B).

The inventive sun glare protection device, as noted above provides the benefits of a dynamic system providing protection from sun glare without the necessity of manual interference of the driver and with all units/parts, which are necessary, being preassembled and installed in the vehicle. Thus, error prone "human factor", which are associated with glasses, is excluded. The inventive sun glare protection device, next to serving its primary purpose could in addition be installed on one or more of the side or rear windows, in which case the sensor, which is capable to detect the intensity of light in an estimated position of the driver's eyes can instead detect the intensity of light in the estimated position of the eyes of the front or a rear passenger depending on which window the device is installed. As noted above, the device in this case can also be adapted to be able to block out heat from the inside of the vehicle. Yet in addition, the inventive sun glare protection device could be adapted to be susceptive to glare and light from the headlights of incoming vehicles.

The device can in principle be installed in all kinds of vehicles including regular cars, trucks of busses. In addition, it is envisaged that the inventive device could be installed in helmets for two-wheelers or airplanes.

## Claims

1. A sun glare protection device (2), which is adapted to be installable on the windscreen of a vehicle (1) from the inside, said device (2) comprising an electrically activatable thin film (3), which covers at least the 80% of the surface of the device (2) and which on electrical activation changes its opacity or translucency, and comprising a light sensor, **characterized in that** the light sensor is attached to the electrically activatable thin film (3) and capable to detect the intensity of light in an estimated position of the driver's eyes **in that** the sensor (4) is configured to detect the position of the sun relative to the orientation of a windscreen.

2. Sun glare protection device (2) according to claim 1, wherein the electrically activatable thin film (3) is based on an electrochromic material, a suspended-particle material or a polymer-dispersed liquid-crystal material, preferably, on a polymer-dispersed liquid-crystal material.

3. Sun glare protection device (2) according to claim 1 or 2, wherein the light sensor (4) is based on the on the principles of a pyrheliometer and preferably is fabricated with a transparent electro conductive material.

4. Sun glare protection device (2) according to claim 3, wherein the light sensor (4) is fabricated from silver nanowires or a zinc oxide based material, preferably an indium or hafnium doped zinc oxide based material.

5. Sun glare protection device (2) according to any one of the preceding claims, wherein the light sensor (4) is connected to a control device (5), preferably via printed circuitry, wherein the control device (5) controls the transparency of the electrically activated thin film (3) based on the intensity of the light detected by the light sensor (4).

6. Sun glare protection device (2) according to claim 5, wherein the light sensor (4) is connected to a control device (5) via printed circuitry and the circuitry is fabricated from a transparent electro conductive material.

7. Sun glare protection device (2) according to claim 5 or 6, wherein the control device (5) is positioned on the periphery of the electrically activated thin film (3).

8. Method for the production of a sun glare protection device (2) according to any one of claim 1 to 7, wherein substrate comprising an electrically activatable thin film (3) is provided and a light sensor (4) is attached thereto, preferably, wherein the light sensor (4) is fabricated with a transparent electro conductive material.

9. Vehicle (1) comprising a sun glare protection device (2) according to any one of claims 1 to 7.

10. Vehicle (1) according to according to claim 9, wherein the sun glare protection device (2) is removably attached to the windscreen of the vehicle (1).

11. Use of a sun glare protection device (2) according to any of the claims 1 to 7, wherein the light sensor (4) is installed between the vehicles windscreen and the position of the driver's eyes in a vehicle (1) and is electrically coupled to the electrically activatable thin film (3), and wherein means are provided to adjust the translucency and/or opacity of the electrically activatable thin film (3) based on the intensity of light measured by the light sensor (4).

12. Use according to claim 11, wherein the light sensor (4) is fabricated with a transparent electro conductive material such that the transparent electro conductive material is used to prepare the sensor (4), but is not necessarily the only material used to prepare the sensor (4), and preferably, wherein the light sensor (4) is printed on the transparent electro conductive material.

## Patentansprüche

1. Sonnenblendschutzvorrichtung (2), die dazu eingerichtet ist, von innen an der Windschutzscheibe eines Fahrzeugs (1) installierbar zu sein, wobei die Vorrichtung (2) einen elektrisch aktivierbaren Dünnfilm (3) umfasst, der mindestens 80 % der Oberfläche der Vorrichtung (2) bedeckt und der bei elektrischer Aktivierung seine Opazität oder Transluzenz ändert, und umfassend einen Lichtsensor, **dadurch gekennzeichnet, dass** der Lichtsensor an dem elektrisch aktivierbaren Dünnfilm (3) angebracht ist und in der Lage ist, die Intensität von Licht an einer geschätzten Position der Augen des Fahrers zu detektieren, wobei der Sensor (4) dazu ausgelegt ist, die Position der Sonne relativ zu der Orientierung einer Windschutzscheibe zu detektieren.

2. Sonnenblendschutzvorrichtung (2) nach Anspruch 1, wobei der elektrisch aktivierbare Dünnfilm (3) auf einem elektrochromen Material, einem Schwebeteilchenmaterial oder einem polymerdispergierten Flüssigkristallmaterial, vorzugsweise einem polymerdispergierten Flüssigkristallmaterial, basiert.

3. Sonnenblendschutzvorrichtung (2) nach Anspruch 1 oder 2, wobei der Lichtsensor (4) auf den Prinzipien eines Pyrheliometers basiert und vorzugsweise aus einem transparenten, elektrisch leitfähigen Material hergestellt ist.

4. Sonnenblendschutzvorrichtung (2) nach Anspruch 3, wobei der Lichtsensor (4) aus Silbernanodrähten oder einem Material auf Zinkoxidbasis hergestellt ist, vorzugsweise einem mit indium- oder hafniumdotierten Material auf Zinkoxidbasis.

5. Sonnenblendschutzvorrichtung (2) nach einem der vorstehenden Ansprüche, wobei der Lichtsensor (4) mit einer Steuervorrichtung (5) verbunden ist, vorzugsweise über eine gedruckte Schaltungsanordnung, wobei die Steuervorrichtung (5) die Transparenz des elektrisch aktivierten Dünnfilms (3) basierend auf der Intensität des durch den Lichtsensor (4) detektierten Lichts steuert.

6. Sonnenblendschutzvorrichtung (2) nach Anspruch 5, wobei der Lichtsensor (4) über eine gedruckte Schaltungsanordnung mit einer Steuervorrichtung (5) verbunden ist und die Schaltungsanordnung aus einem transparenten, elektrisch leitfähigen Material hergestellt ist.

7. Sonnenblendschutzvorrichtung (2) nach Anspruch 5 oder 6, wobei die Steuervorrichtung (5) an der Peripherie des elektrisch aktivierten Dünnfilms (3) positioniert ist.

8. Verfahren für die Produktion einer Sonnenblendschutzvorrichtung (2) nach einem der Ansprüche 1 bis 7, wobei ein Substrat, das einen elektrisch aktivierbaren Dünnfilm (3) umfasst, bereitgestellt ist und ein Lichtsensor (4) daran angebracht ist, vorzugsweise wobei der Lichtsensor (4) aus einem transparenten, elektrisch leitfähigen Material hergestellt ist.

9. Fahrzeug (1), das eine Sonnenblendschutzvorrichtung (2) nach einem der Ansprüche 1 bis 7 umfasst.

10. Fahrzeug (1) nach Anspruch 9, wobei die Sonnenblendschutzvorrichtung (2) entfernbar an der Windschutzscheibe des Fahrzeugs (1) angebracht ist.

11. Verwendung einer Sonnenblendschutzvorrichtung (2) nach einem der Ansprüche 1 bis 7, wobei der Lichtsensor (4) zwischen der Fahrzeugwindschutzscheibe und der Position der Augen des Fahrers in einem Fahrzeug (1) installiert ist und mit dem elektrisch aktivierbaren Dünnfilm (3) elektrisch gekoppelt ist, und wobei Mittel bereitgestellt sind, um die Transluzenz und/oder Opazität des elektrisch aktivierbaren Dünnfilms (3) basierend auf der Intensität von durch den Lichtsensor (4) gemessenem Licht anzupassen.

12. Verwendung nach Anspruch 11, wobei der Lichtsensor (4) aus einem transparenten, elektrisch leitfähigen Material hergestellt ist, sodass das transparente, elektrisch leitfähige Material verwendet wird, um den Sensor (4) zu erstellen, aber nicht notwendigerweise das einzige Material ist, das zum Erstellen des Sensors (4) verwendet wird, und vorzugsweise wobei der Lichtsensor (4) auf das transparente, elektrisch leitfähige Material gedruckt ist.

## Revendications

1. Dispositif (2) de protection contre l'éblouissement du soleil, conçu pour pouvoir être installé de l'intérieur sur le pare-brise d'un véhicule (1), ledit dispositif (2) comprenant une couche mince (3) activable électriquement, laquelle couvre au moins 80 % de la surface du dispositif (2) et change d'opacité ou de translucidité lors de son activation électrique, et comprenant un capteur de lumière, **caractérisé en ce que** le capteur de lumière est fixé à la couche mince (3) activable électriquement et apte à détecter l'intensité de lumière à une position estimée des yeux du conducteur en ce sens que le capteur (4) est configuré pour détecter la position du soleil par rapport à l'orientation d'un pare-brise.

2. Dispositif (2) de protection contre l'éblouissement du soleil selon la revendication 1, la couche mince (3) activable électriquement étant basée sur un matériau électrochromique, un matériau à particules en suspension ou un matériau à cristaux liquides dispersés dans des polymères, de préférence sur un matériau à cristaux liquides dispersés dans des polymères.

3. Dispositif (2) de protection contre l'éblouissement du soleil selon la revendication 1 ou 2, le capteur de lumière (4) étant basé sur les principes d'un pyrhéliomètre et, de préférence, étant constitué d'un matériau électroconducteur transparent.

4. Dispositif (2) de protection contre l'éblouissement du soleil selon la revendication 3, le capteur de lumière (4) étant constitué de nanofils d'argent ou d'un matériau à base d'oxyde de zinc, de préférence un matériau à base d'oxyde de zinc dopé à l'indium ou à l'hafnium.

5. Dispositif (2) de protection contre l'éblouissement du soleil selon l'une quelconque des revendications précédentes, le capteur de lumière (4) étant relié à un dispositif de commande (5), de préférence via une circuiterie imprimée, le dispositif de commande (5) commandant la transparence de la couche mince (3) activée électriquement sur la base de l'intensité de la lumière détectée par le capteur de lumière (4).

6. Dispositif (2) de protection contre l'éblouissement du soleil selon la revendication 5, le capteur de lumière (4) étant relié à un dispositif de commande (5) via une circuiterie imprimée et la circuiterie étant constituée d'un matériau électroconducteur transparent.

7. Dispositif (2) de protection contre l'éblouissement du soleil selon la revendication 5 ou 6, le dispositif de commande (5) étant positionné sur la périphérie de la couche mince (3) activée électriquement.

8. Procédé de fabrication d'un dispositif (2) de protection contre l'éblouissement du soleil selon l'une quelconque des revendications 1 à 7, comprenant la fourniture d'un substrat comprenant une couche mince (3) activable électriquement et la fixation d'un capteur de lumière (4) au substrat, de préférence le capteur de lumière (4) étant constitué d'un matériau électroconducteur transparent.

9. Véhicule (1) comprenant un dispositif (2) de protection contre l'éblouissement du soleil selon l'une quelconque des revendications 1 à 7.

10. Véhicule (1) selon la revendication 9, le dispositif (2) de protection contre l'éblouissement du soleil étant fixé de manière amovible au pare-brise du véhicule (1).

11. Utilisation d'un dispositif (2) de protection contre l'éblouissement du soleil selon l'une quelconque des revendications 1 à 7, le capteur de lumière (4) étant installé entre le pare-brise du véhicule et la position des yeux du conducteur dans un véhicule (1) et étant couplé électriquement à la couche mince (3) activable électriquement, et des moyens étant prévus pour régler la transparence et/ou l'opacité de la couche mince (3) activable électriquement sur la base de l'intensité de lumière mesurée par le capteur de lumière (4).

12. Utilisation selon la revendication 11, le capteur de lumière (4) étant constitué d'un matériau électroconducteur transparent de sorte que le matériau électroconducteur transparent serve à préparer le capteur (4) mais qu'il ne soit pas nécessairement le seul matériau servant à préparer le capteur (4) et, de préférence, le capteur de lumière (4) étant imprimé sur le matériau électroconducteur transparent.
